# EUROPEAN PATENT SPECIFICATION

(11) **EP 1 919 174 B1**
(45) Date of publication and mention of the grant of the patent: **21.02.2018**
(21) Application number: 07019803.1
(22) Date of filing: 10.10.2007
(51) Int. Cl.: H04M 1/64, H04M 1/725

(54) **Presence information delivery apparatus and method for mobile communication network**
Vorrichtung zur Lieferung von Anwesenheitsinformationen und entsprechendes Verfahren für ein mobiles Kommunikationsnetzwerk
Appareil de fourniture d'informations de présence et procédé pour réseau de communication mobile

(30) Priority: 31.10.2006 KR 20060106500
(43) Date of publication of application: 07.05.2008
(73) Proprietor: Samsung Electronics Co., Ltd., Suwon-si, Gyeonggi-do, 443-742 (KR)
(72) Inventor: Do, Shin Hee, Suwon-si Gyeonggi-do (KR); Hwang, Hye Kyoung, Suwon-si Gyeonggi-do (KR)
(74) Representative: HGF Limited

(56) References cited:
- EP-A- 0 763 958
- WO-A-02/17602
- DE-A1-102004 054 808
- US-A1- 2006 053 379

## Description

### BACKGROUND OF THE INVENTION

### 1. Field of the Invention

The present invention relates to a mobile communication network and, in particular, to a presence information delivery apparatus and method for use in a mobile communication network, using short message service (SMS).

### 2. Description of the Related Art

Active Phonebook is an application powered with presence information service. Presence information service is a network service that accepts, stores, distributes presence information of individuals by group or individual.

Typically, presence information of an individual is transmitted from a mobile handset to a Packet Data Serving Node (PDSN) via Base Station Controller (BSC). The PDSN transmits the presence information to the presence server through a session initiation protocol (SIP) server. In this manner, the mobile handset informs the presence server in what ways a subscriber is currently present. That is, the presence server manages the presence information in the form of a database and provides, when presence information of a specific subscriber is requested, the requested presence information. When a subscriber requests presence information of a counterparty subscriber, the presence information of the counterparty subscriber is transmitted from the presence server to the requesting subscriber via the SIP server, PDSN, BSC, and base station with which the requesting subscriber is associated.

However, the conventional presence information delivery apparatus is disadvantageous, since too many network elements are involved processing and relaying the presence information and the mobile handset most likely support various additional protocols such as SIP.

US2006/0053379 discloses a system and method for providing a user interface for controlling a communication mode of a client device. The interface enables a user to set a presence and/or a communication mode, which the client device communicates to other devices directly or via an intermediary server.

DE102004054808 discloses a communication device operable to send a message to a caller when the caller calls the device and the recipient of the call is unable to or unwilling to accept the call at that time. The content of the message may be specified by a key or several keys.

WO02/17602 discloses a method and apparatus for communicating user related information using a wireless information device. A mobile telephone is disclosed which can supply or post 'pre-answer' information which the device owner considers of relevance to a potential call recipient.

### SUMMARY OF THE INVENTION

The present invention has been made in an effort to solve the above problems, and it is an object of the present invention to provide a presence information delivery apparatus and method for a mobile communication network that is capable of delivering presence information through a short message service (SMS) without an additional presence server.

In accordance with an aspect of the present invention, the above and other objects are accomplished by an information transmission method for a mobile handset. The information transmission method includes generating presence information file; and generating a presence information message containing the presence information file, characterized in that the method further comprises the step of transmitting the presence information message to at least one member of a predetermined user group using a short message service, wherein the presence information file comprises a type for distinguishing a type of the presence information message, an identifier for identifying a user, a presence code for indicating presence information, and an ID for identifying a membership of the user.

In accordance with another aspect of the present invention, the above and other objects are accomplished by an information reception method for a mobile handset. The information reception method is characterized in that the method includes receiving a message through a short message service; determining if the message contains a type for distinguishing a type of a presence information message; extracting, if the message contains the type for distinguishing a type of a presence information message, a presence information file from the presence information message; and updating presence information of a member of a predetermined user group in accordance with the presence information file.

In accordance with another aspect of the present invention, an information transmitter of a mobile handset accomplishes the above and other objects. The information transmitter includes a storage unit for storing an active phonebook managing presence information on members of at least one user group; a message coding module for generating the presence information file using the presence information; and a control unit for generating a presence information message with the presence information file, characterized in that the control unit is arranged to transmit the presence information message to the members of the user group using a short message service, wherein the presence information file further comprises a type for distinguishing a type of the presence information message, an identifier for identifying the user, the presence code for indicating presence information, and the ID for identifying a membership of the user.

In accordance with another aspect of the present invention, an information receiver of a mobile handset accomplishes the above and other objects. The information receiver is characterized in that it includes a radio frequency unit for receiving a radio signal representing a message through a short message service; a message coding module for determining if the message contains a type for distinguishing a type of a presence information message and decoding, if the message contains the type for distinguishing the type of the presence information message, the message; a message analysis module for extracting a presence information file from the decoded message; an active phonebook module for storing an active phone book managing a user group having members for sharing presence information and updating the active phonebook with the presence information file; and a control unit for displaying the presence information on a display unit of the mobile handset.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram of a configuration of a mobile handset employing a presence information delivery apparatus according to the present invention;
FIG. 2 shows the message format of a presence information format for use in the presence information delivery apparatus according to the present invention;
FIG. 3 is a flow diagram of a presence sharing procedure with the mobile handset of FIG. 1;
FIGs. 4A and 4B are screen images illustrating steps of the presence sharing procedure of FIG. 3.
FIG. 5 is a flowchart of a presence information delivery method according to the present invention;
FIG. 6 is a screen image of a step for updating presence information in the presence information delivery method of FIG. 5.
FIG. 7 is a flowchart of a presence information message reception procedure of a presence information delivery method according to the present invention;
FIG. 8 is a screen image of a step of the presence information message reception procedure of FIG. 7;
FIG. 9 is a flowchart of presence information display procedure of a presence information deliver method according to the present invention; and
FIG. 10 is a screen image illustrating a step of the presence information display procedure of FIG. 9.

### DETAILED DESCRIPTION OF PREFERRED EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

The same or similar elements in the drawings are designated by the same reference numerals as far as possible although they are shown in different drawings.

In the following embodiments, the presence information delivery apparatus and method are described with a mobile handset. However, the present invention is not limited to the mobile handset. For example, the presence information delivery apparatus and method can be implemented with any information processing device supporting a short message service, such as a Personal Digital Assistant (PDA), a laptop computer, a Smartphone, a 3^{rd} Generation (3G) standard mobile terminal, a Code Division Multiple Access (CDMA) terminal, a Global System for Mobile communication (GSM) terminal, a Global Packet Radio Services (GPRS) terminal, a Wireless Local Area Network (WLAN) terminal, a Wireless Broadband (WiBro) Terminal, and a High Speed Downlink Packet Access (HSDPA) terminal.

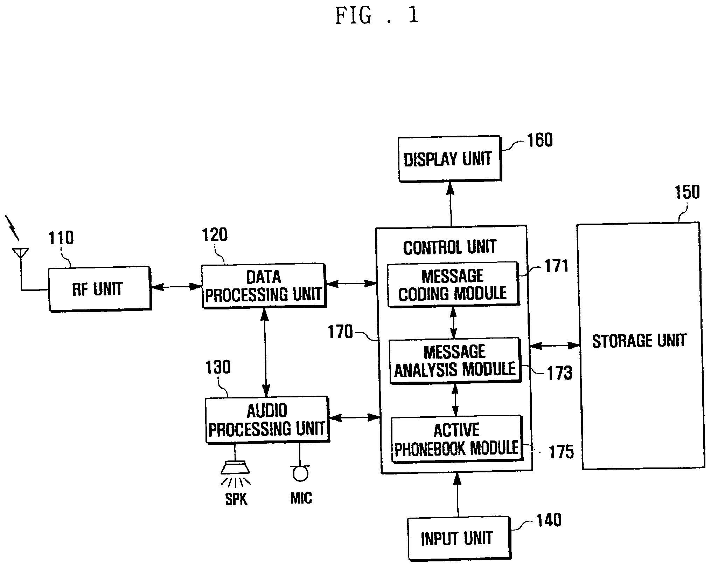

Referring to FIG. 1, the mobile handset includes a radio frequency (RF) unit 110, a data processing unit 120, an audio processing unit 130, an input unit 140, a storage unit 150, a display unit 160, and a control unit 170.

RF unit 110 is responsible for RF communication with a base station. RF unit 110 includes an RF transmitter for up-converting and amplifying a baseband signal to be transmitted and an RF receiver for low noise amplifying and down-converting a received radio frequency signal.

Data processing unit 120 is responsible for processing voice data output from audio processing unit 130, alphanumeric data input through input unit 140, and data output from RF unit 110.

Data processing unit 120 can include a transmission part for encoding and modulating a signal to be transmitted and a reception part for demodulating and decoding a received signal. That is, data processing unit 120 can include a modem and a codec. The codec includes a data codec for processing packet data and an audio codec for processing audio signals including voice.

Audio processing unit 130 is responsible for processing an audio signal output from data processing unit 120 to output the audio signal as an audible sound wave through a speaker (SPK) and processing a sound wave input through a microphone to output the sound wave as an audio signal to data processing unit 120.

Input unit 140 is provided with a plurality of alphanumeric keys for furnishing user input data and various function keys for executing corresponding operations. The input unit can be implemented with additional navigation keys, side keys, and shortcut keys. Input unit 140 generates command signals associated with user configuration and function control and transmits the command signals to control unit 170 in response to corresponding key inputs.

Storage unit 150 stores application programs associated with the presence information delivery of the present invention, downloaded contents, and user data input by a user. Storage unit 150 can include at least one buffer for buffering application data generated while operating messaging service applications. Storage unit 150 can include a program region and a data region. The program region includes an operating system (OS) for booting the mobile handset and application programs associated with messaging service. The application programs are activated for executing a user command under the control of control unit 170. The data region stores application data generated while operating the application programs, messages received through a short message service, and user configuration data including Active Phonebook data. The Active Phonebook data includes information on groups and group members constituting a phone book. The information of the group member includes a name, identification (ID), phone number, and presence. The presence information includes a presence code and presence data.

Display unit 160 displays menu screens associated with applications installed in the mobile phone, user input data, and function configuration screens. Display unit 160 can be implemented with a liquid crystal display supporting a touch screen function. In this case, display unit 160 can be used as a part of input unit 140.

Control unit 170 controls general operations of the mobile terminal cooperative signaling between the units. That is, control unit 170 controls the cooperative signaling between data processing unit 120, input unit 170, and display unit 120. The control can be implemented with functions of data processing unit 120. Control unit 170 can parse and analyze a header and body of a message file received through data processing unit 120.

In this embodiment, control unit 170 includes a message coding module 171, a message analysis module, and an active phonebook module 175.

Message coding module 171 encodes presence information into a short message format so as to output the presence information message and decodes a received presence information message into the presence information. The presence information obtained by decoding the presence information message is output to message analysis module 173.

Message analysis module 173 extracts presence data from the presence information and transmits the presence data to active phone book module 175.

Active phonebook module 175 manages the presence data in association with the phonebook data. The active phonebook manages the presence data by group. The record of each member of the group includes a member's ID and presence information. Accordingly, the active phonebook module 175 manages designation of a group and presence information and IDs of group members.

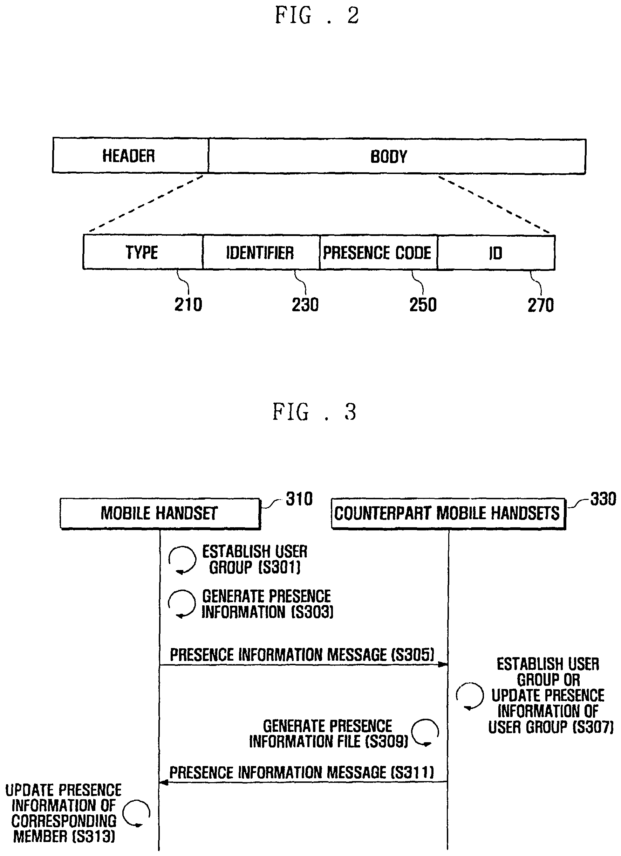

Referring to FIG. 2, the presence information message includes a header and a body. The body includes presence information file. The presence information file includes a type 210, an identifier 230, a presence code 250, and an ID 270.

Type 210 is a read-only code for distinguishing the type of the presence information message. Preferably, type 210 is a read-only code, for example, "0xF0EE." Type 210 is written by message coding module 171 in the body of the presence information message to be transmitted. Message coding module 171 also decodes type 210 of a received message to check if the message is a presence information message.

The identifier is a code generated by performing binary coding on a 12 digit phone number for identifying the handset. For example, an identifier of a handset having its phone number "010-1234-5678" is obtained by adding a zero before its first digit and then binary-coded, resulting in '0000 0000 0001 0000 - 0001 0010 0011 0100 - 0101 0110 0011 1000.' Identifier 230 is used by the message analysis module 173 for subscriber authentication.

Presence code 250 is a binary status indicator that conveys ability and willingness of a potential communication partner. Table 1 shows mapping between presence information and presence code.

**Table 1**

| | Presence Information | Presence Code |
|---|---|---|
| 1 | DEREGISTRATION | 0000 0000 |
| 2 | OFF LINE | 0000 0001 |
| 3 | ON LINE | 0000 0010 |
| 4 | BUSY | 0000 0011 |
| 5 | SLEEPING | 0000 0100 |
| 6 | NOT AVAILABLE | 0000 0101 |
| 7 | RESERVED | 0000 0110 |
| 8 | RESERVED | 0000 0111 |
| 9 | NOT USED | 0000 1000 |

If the presence information message is received, the mobile handset analyzes presence code 250 contained in the presence information message so as to recognize a status of the communication partner. In this embodiment, a presence text message can be transmitted with presence code 250. The presence text message is composed by the user and contained in the rest part of the body of the presence information message.

ID 270 is a character string input by the user for distinguishing identifying a membership for a user group.

Presence code 250 and ID 270 is input by active phonebook module 175 and stored into storage unit 150 under the control of control unit 170. Presence code 250 and ID 270 are read from storage unit 150 to be transferred to the message coding module 171.

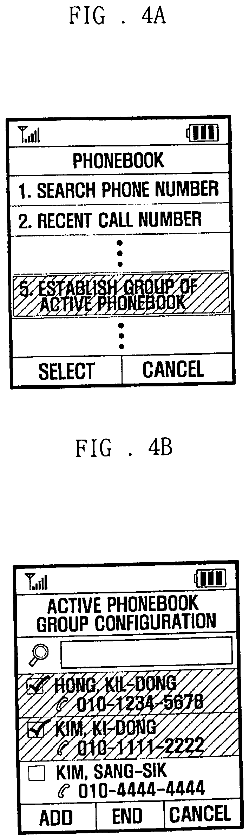

A presence information sharing procedure with the above-structured mobile handset is described hereinafter with reference to FIGs. 3, 4a, and 4b.

Referring to FIG. 3, a mobile handset 310 establishes a user group for sharing presence information in step S301. Mobile handset 310 displays a phonebook menu screen, as shown in FIG. 4A, through which the user can select an "active phone book group configuration" menu and establish a user group through an active phonebook group configuration menu screen as shown in FIG. 4B.

After establishing a user group, mobile handset 310 generates a presence information message containing its presence information in step S303. The presence information is contained in the presence information message in the form of a presence information file (see FIG. 2). The presence information can be provided as presence code 250 of the presence information file and/or added in the form of a text.

Next, mobile handset 310 transmits the presence information message to potential counterpart mobile handsets 330 in step S305. Potential counterpart mobile handsets 330 are the members of the user group.

Upon receiving the presence information message, each potential counterpart mobile handset 330 of the user group analyzes the presence information message and updates presence information of the corresponding user group of its phone book with reference to ID 270 and the presence information extracted from the presence information message in step S307.

Next, potential counterpart mobile handset 330 generates a presence information message containing its presence information in step S309 and transmits the presence information message to the mobile handset 310 in step S311.

If the presence information message of the potential counterpart mobile handset 330 is received, mobile handset 310 analyzes the presence information message and updates the user group of the phonebook with reference to the ID and presence information of the presence information message in step S313.

A presence information delivery method is described in detail hereinafter. In the following embodiment, if presence information of the mobile handset is changed, the mobile handset transmits the changed presence information to the potential counterpart mobile handsets such that the potential counterpart mobile handsets update presence information on the corresponding member of the user group on the basis of the newly received presence information.

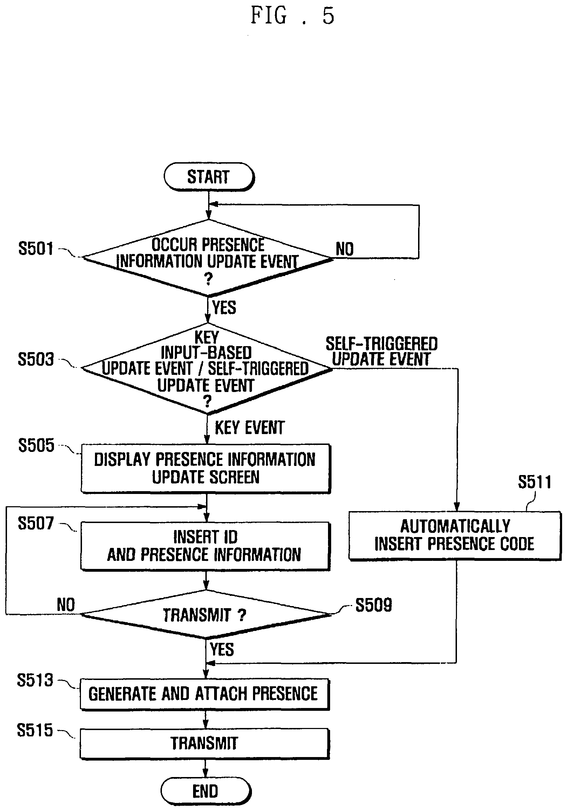

Referring to FIG. 5, mobile handset 310 monitors an occurrence of a presence information update event in step S501. If the presence information update event is detected, mobile handset 310 determines if the event has occurred by a key input or according to a status change in step S503. In this embodiment, the presence information update event is classified into key input-based update event and self-triggered update event caused by a status change of the mobile handset. The key input-based update event occurs when the user inputs a key for calling a presence information update menu or for establishing a new user group. The self-triggered event occurs when the mobile handset is turned on or off, or the mobile handset is configured to transmit presence information periodically.

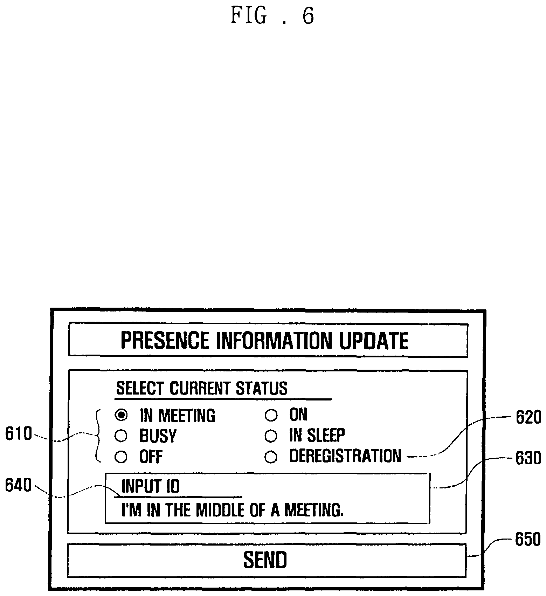

If the presence information update event is a key input-based update event, mobile handset 310 displays a presence information update screen on display unit 160 as shown in FIG. 6 in step S505.

On the presence information update screen of FIG. 6, the user can select or input presence code 250 and presence information. At this time, control unit 170 of mobile handset 310 controls active phonebook module 175 to record the presence information and ID 270 in presence information file in step S507. The presence information can be selected among predetermined status, "In meeting", "Busy", "Off", "On", and "In sleep" provided with selectable radio buttons 610, or input by the user through a text box 630.

When the presence information is selected using the radio buttons, a presence code 250 corresponding to the selected radio button is inserted to the presence information file. For example, if the radio button "busy" is selected, presence code (250) "0000 0011" is inserted into the presence information file. Radio button 260 is provided for deregistration from the user group. If deregistration button 620 is selected, a presence code "0000 0000" is inserted into the presence information file. In the case that the user writes the presence information in text box 630, the presence information written by the user is inserted into part of the body of the presence information message. For example, the user may write the presence information like "I am in the middle of a meeting." Text box 630 is provided with an ID space for inputting an ID. If the user input an ID on the ID space, it is inserted into ID 270 of the presence information file. If a "send" button 650 is selected after setting the presence information on the presence information update screen, mobile handset 310 detects a key input for selecting the "send" button in step S509.

At step S503, if the presence information update event is a self-triggered update event generated by a power-on or power-off, a presence code 250 corresponding to the event is automatically inserted to the presence information file in step S511. For example, if a power-off event occurs, "0000 0001" (OFF LINE) is inserted to the presence information file.

Next, message coding module 173 inserts type 210 and identifier 230 into the presence information file, and active phonebook module 175 inserts recipient information into the header of the presence information message such that the presence information message is transmitted to the member of the user group, and inserts the presence information file into the body of the presence information message in step S513. Next, control unit 270 transmits the presence information message in step S515.

The presence information message is transmitted to the members of the user group via a short message service center (SMSC).

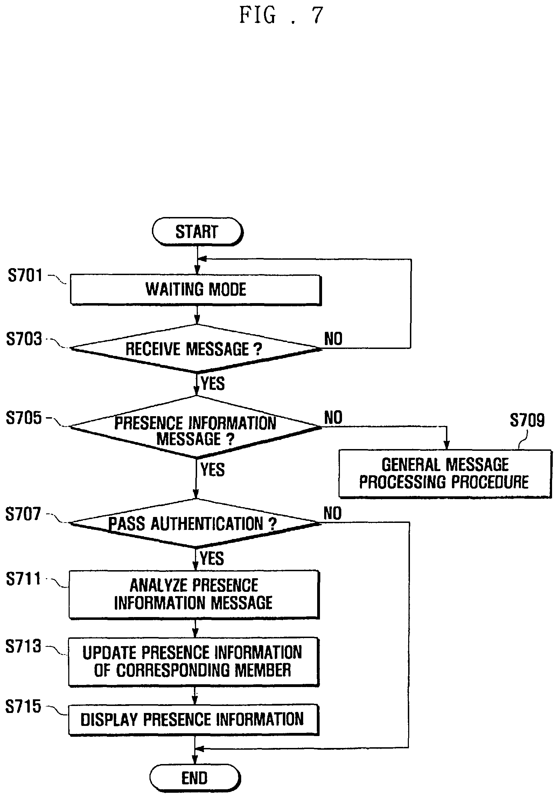

Referring to FIG. 7, if a message is received in step S703 while in a waiting mode in step S701, the mobile handset determines if the message is a presence information message in step S705. If the message is not a presence information message, the mobile handset processes the message in accordance with a general message processing procedure in step S709.

In order to determination the type of the message, control unit 270 parses the message into a header and body, and message analysis module 171 checks type 210 of the presence information file contained in the body.

If the message is a presence information message, message analysis module 173 checks identifier 230 of the presence information file for authentication in step S707. Identifier 230 represents a unique number of the transmit part such that it is used for authentication. That is, the authentication is performed by comparing the identifier to phone numbers listed in the active phonebook.

If the message passes the authentication, message analysis module 173 extracts presence code 250, ID 270, and presence information text from the presence information message and forwards extracted presence code 250, ID 270, and presence information text to the active phonebook module 175 in step S711.

Active phonebook module 175 updates the presence information of corresponding member in the active phonebook using received presence code 250, ID 270, and presence information text and transfers the updated presence information to the control unit 270 in step S713.

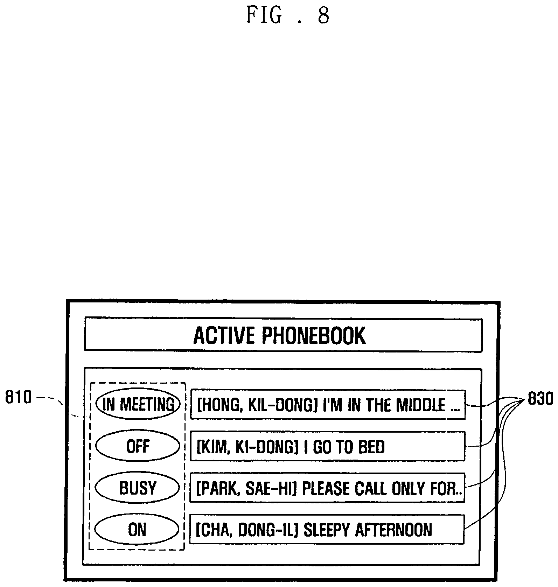

Upon receiving the updated presence information, control unit 170 displays the presence information on display unit 160 in step S715 and as shown in FIG. 8. In FIG. 8, the presence information is presented in the form of icons 810 representing "In meeting", "OFF", "BUSY" and "OFF." The icons are matched with presence code 250 of the presence file, and text boxes 830 present the ID and presence information text of the corresponding member. Through the active phonebook screen of FIG. 8, the user can recognize the status of the members of the user group.

As described in the above embodiment, the presence information delivery apparatus and method can share and update the presence information of the active phonebook without additional network element such as presence server. In this embodiment, a user can recognize, when attempting to call a member of a specific user group managed by an active phonebook, a status of the member according to the presence information displayed on the display unit of the mobile handset.

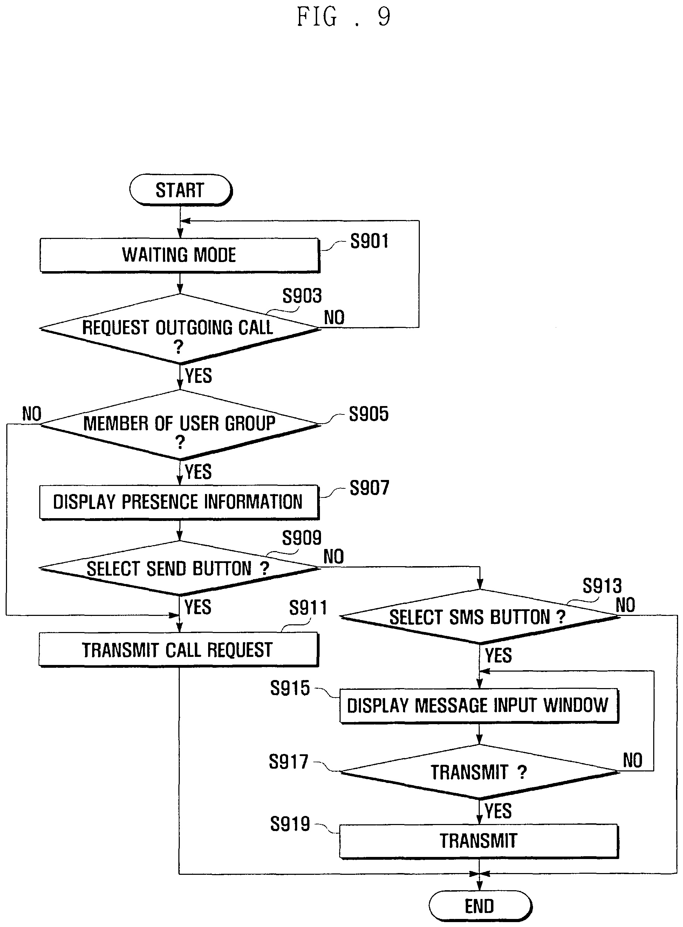

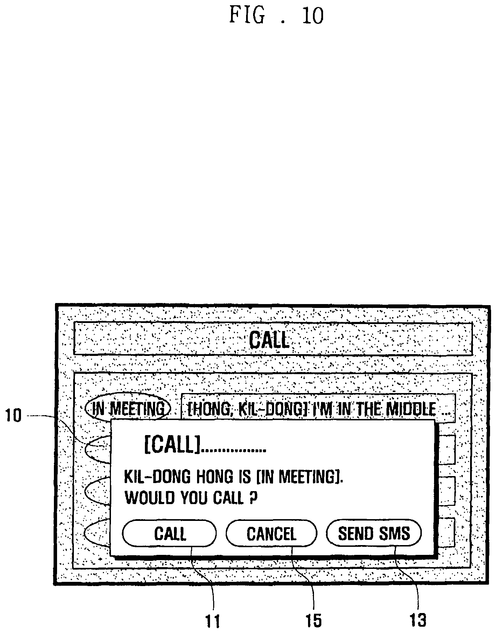

A presence information display procedure of the presence information delivery method is described hereinafter with reference to FIGs. 9 and 10.

Referring to FIG. 9, if a phone number is input, while the mobile handset is in a waiting mode in step S901, through the input unit or selected from a phone number list of an active phonebook, and a key input for attempting an outgoing call request is detected in step S903, control unit 170 controls active phonebook module 171 to compare the requested phone number to a list of members of a specific user group and determines if the requested phone number is for a member of the user group in step S905.

If the requested phone number is for a member of the user group, control unit 170 displays presence information on the member in the form of a popup window 10 as shown in FIG. 10 in step S907. If the requested phone number is not for a member of the user group, control unit 170 transmits a call request in step S911.

Popup window 10 displays the presence information of the member corresponding to the phone number input or selected by the user for the outgoing call, together with "Call", "Cancel", and "SMS" buttons 11, 13 and 15.

Accordingly, the user can select one of the buttons 11, 13, and 15 in consideration of the presence information. For example, the presence information of a called member "Hong, Kil-Dong" shows "in meeting", the user may cancel the call by selecting "Cancel" button.

After displaying the presence information of the called member, control unit 170 determines if a key input for selecting "call" button 11 is detected in step S909. If a key input for selecting "call" button 11 is detected, control unit 170 transmits the call request in step S911. If a key input for selecting the "call" button is not detected, control unit 170 determines if a key input for selecting the "SMS" button 13 is detected in step S913. If a key input for selecting "SMS" button 13 is detected, control unit 170 displays a message input window in step S915 and determines if a key input for completing the message input is detected in step S917. If the key input for completing the message input is detected, control unit 170 transmits the completed message in step S919. If there is a key input for selecting the "cancel" button, control unit 170 ends the call request process. By sharing the presence information of members of a specific group in the above manner, the utilization of the mobile handset is improved. For example, the user can avoid calling a busy person and provides members of a specific group with simple information.

As described above, the presence information delivery apparatus and
method of the present invention are advantageous since the presence information of members of a specific group can be shared by the members without the engagement of an additional presence server. Also, the presence information delivery apparatus and method of the present invention allows the user to share their presence information, resulting in enhancement of mobile communication utilization.

Although exemplary embodiments of the present invention are described in detail hereinabove, it should be clearly understood that many variations and/or modifications of the basic inventive concepts herein taught which may appear to those skilled in the present art will still fall within the scope of the present invention, as further defined by the appended claims.

## Claims

1. An information transmission method for a mobile handset, comprising:
generating a presence information file; and
generating a presence information message containing the presence information file;
**characterized in that** the method further comprises the step of transmitting the presence information message to at least one member of a predetermined user group using a short message service,
wherein the presence information file comprises a type (210) for distinguishing the type of the presence information message, an identifier (230) for identifying a user, a presence code (250) for indicating presence information, and an ID (270) for identifying a membership of the user.

2. The information transmission method of claim 1, wherein the presence code (250) is generated in accordance with a key input event.

3. The information transmission method of claim 1, wherein the presence code (250) is automatically generated in accordance with power-on and power-off events of the mobile handset.

4. The information transmission method of claim 1, wherein the presence information message comprises a presence information text.

5. An information reception method for a mobile handset,
comprising the step of receiving a message through a short message service;
the method being **characterized by** the steps of:
determining if the message contains a type (210) for distinguishing the type of a presence information message;
extracting, if the message contains the type (210) for distinguishing the type of the presence information message, a presence information file from the message; and
updating presence information of a member of a predetermined user group in accordance with the presence information file.

6. The information reception method of claim 5, further comprising:
receiving a phone number for a call through an input means (140) of the mobile handset;
determining if the phone number is for the member of the user group; and
displaying, if the phone number is for the member of the user group, presence information of the member.

7. The information reception method of claim 6, further comprising transmitting a call request to the phone number in accordance with a key input.

8. The information reception method of claim 6, further comprising transmitting a message to the phone number in accordance with the key input.

9. The information reception method of claim 6, further comprising canceling the call in accordance with the key input.

10. The information reception method of claim 5, wherein the presence information message is determined on the basis of a type field (210) contained in the message.

11. The information reception method of claim 5, wherein updating presence information comprises:
retrieving a member having an ID (270) and identifier (230) of the presence information file from a database of the user group; and
updating the presence information with a presence code (250) and presence text contained in the presence information file.

12. The information reception method of claim 5, wherein the presence information message includes a presence information text.

13. The information reception method of claim 5, wherein the presence information file further comprises an identifier (230) for identifying the user, the presence code (250) for indicating presence information, and the ID (270) for identifying a membership of the user.

14. An information transmitter of a mobile handset, comprising:
a storage unit (150) for storing an active phonebook managing presence information on members of at least one user group;
a message coding module (171) for generating the presence information file (170) using the presence information; and
a control unit (170) for generating a presence information message with the presence information file,
**characterized in that** the control unit (170) is arranged to transmit the presence information message to the members of the user group using a short message service,
wherein the presence information file further comprises a type (210) for distinguishing the type of the presence information message, an identifier (230) for identifying the user, the presence code (250) for indicating presence information, and the ID (270) for identifying a membership of the user.

15. An information receiver of a mobile handset, comprising:
a radio frequency unit for receiving a radio signal representing a message through a short message service;
**characterized in**
a message coding module (171) for determining if the message contains a type (210) for distinguishing the type of a presence information message and decoding, if the message contains the type (210) for distinguishing the type of the presence information message, the message;
a message analysis module (173) for extracting a presence information file from the decoded message;
an active phonebook module (175) for storing an active phone book managing a user group having members for sharing presence information and updating the active phonebook with the presence information file; and
a control unit (170) for displaying the presence information on a display unit (160) of the mobile handset.

16. The information receiver of claim 15, wherein the presence information file further comprises an identifier (270) for identifying the user, a presence code (250) for indicating presence information, and an ID (270) for identifying the membership of the user.

## Patentansprüche

1. Ein Verfahren zur Informationsübertragung für einen mobilen Handapparat, das Folgendes umfasst:
Erzeugen einer Anwesenheitsinformationsdatei; und
Erzeugen einer Anwesenheitsinformationsnachricht, in der die Anwesenheitsinformationsdatei enthalten ist;
**dadurch gekennzeichnet, dass** das Verfahren weiter den Schritt der Übertragung der Anwesenheitsinformationsnachricht an mindestens ein Mitglied einer zuvor bestimmten Benutzergruppe anhand eines Kurznachrichtendiensts umfasst,
wobei die Anwesenheitsinformationsdatei einen Typ (210) zum Unterscheiden des Typs der Anwesenheitsinformationsnachricht, eine Kennung (230) zum Identifizieren eines Benutzers, einen Anwesenheitscode (250) zum Angeben von Anwesenheitsinformationen und eine ID (270) zum Identifizieren einer Mitgliedschaft des Benutzers umfasst.

2. Das Verfahren zur Informationsübertragung nach Anspruch 1, wobei der Anwesenheitscode (250) entsprechend einem Tasteneingabeereignis erzeugt wird.

3. Das Verfahren zur Informationsübertragung nach Anspruch 1, wobei der Anwesenheitscode (250) automatisch entsprechend Einschalt- und Ausschaltereignissen des mobilen Handapparats erzeugt wird.

4. Das Verfahren zur Informationsübertragung nach Anspruch 1, wobei die Anwesenheitsinformationsnachricht einen Anwesenheitsinformationstext umfasst.

5. Ein Verfahren zum Informationsempfang für einen mobilen Handapparat, das den Schritt des Empfangs einer Nachricht über einen Kurznachrichtendienst umfasst;
wobei das Verfahren durch die folgenden Schritte gekennzeichnet ist:
Bestimmen, ob die Nachricht einen Typ (210) zum Unterscheiden des Typs einer Anwesenheitsinformationsnachricht umfasst;
Extrahieren einer Anwesenheitsinformationsdatei aus der Nachricht, wenn die Nachricht den Typ (210) zum Unterscheiden des Typs der Anwesenheitsinformationsnachricht umfasst; und
Aktualisieren der Anwesenheitsinformationen eines Mitglieds einer zuvor bestimmten Benutzergruppe entsprechend der Anwesenheitsinformationsdatei.

6. Das Verfahren zum Informationsempfang nach Anspruch 5, wobei dieses weiter Folgendes umfasst:
Empfangen einer Telefonnummer für einen Anruf über eine Eingabeeinheit (140) des mobilen Handapparats;
Bestimmen, ob die Telefonnummer dem Mitglied der Benutzergruppe entspricht; und
Anzeigen von Anwesenheitsinformationen des Mitglieds, wenn die Telefonnummer dem Mitglied der Benutzergruppe entspricht.

7. Das Verfahren zum Informationsempfang nach Anspruch 6, das weiter die Übertragung einer Anrufanforderung an die Telefonnummer entsprechend der Tasteneingabe umfasst.

8. Das Verfahren zum Informationsempfang nach Anspruch 6, das weiter die Übertragung einer Nachricht an die Telefonnummer entsprechend der Tasteneingabe umfasst.

9. Das Verfahren zum Informationsempfang nach Anspruch 6, das weiter den Abbruch des Anrufs entsprechend der Tasteneingabe umfasst.

10. Das Verfahren zum Informationsempfang nach Anspruch 5, wobei die Anwesenheitsinformationsnachricht basierend auf einem in der Nachricht enthaltenen Typfeld (210) bestimmt wird.

11. Das Verfahren zur Informationsübertragung nach Anspruch 5, wobei die Aktualisierung der Anwesenheitsinformationen Folgendes umfasst:
Abrufen eines Mitglieds mit einer ID (270) und Kennung (230) der Anwesenheitsinformationsdatei aus einer Datenbank der Benutzergruppe; und
Aktualisieren der Anwesenheitsinformationen mit einem in der Anwesenheitsinformationsdatei enthaltenen Anwesenheitscode (250) und Anwesenheitstext.

12. Das Verfahren zum Informationsempfang nach Anspruch 5, wobei die Anwesenheitsinformationsnachricht einen Anwesenheitsinformationstext aufweist.

13. Das Verfahren zum Informationsempfang nach Anspruch 5, wobei die Anwesenheitsinformationsdatei weiter eine Kennung (230) zum Identifizieren des Benutzers, den Anwesenheitscode (250) zum Angeben von Anwesenheitsinformationen und die ID (270) zum Identifizieren einer Mitgliedschaft des Benutzers umfasst.

14. Eine Informationsübertragungseinheit eines mobilen Handapparats, die Folgendes umfasst:
eine Speichereinheit (150) zum Speichern eines aktiven Telefonbuchs, in dem Anwesenheitsinformationen zu Mitgliedern aus mindestens einer Benutzergruppe verwaltet werden;
ein Nachrichtenkodierungsmodul (171) zum Erzeugen der Anwesenheitsinformationsdatei (170) anhand der Anwesenheitsinformationen; und
eine Steuereinheit (170) zum Erzeugen einer Anwesenheitsinformationsnachricht mit der Anwesenheitsinformationsdatei,
**dadurch gekennzeichnet, dass** die Steuereinheit (170) für die Übertragung der Anwesenheitsinformationsnachricht an die Mitglieder der Benutzergruppe über einen Kurznachrichtendienst ausgelegt ist,
wobei die Anwesenheitsinformationsdatei weiter einen Typ (210) zum Unterscheiden des Typs der Anwesenheitsinformationsnachricht, eine Kennung (230) zum Identifizieren des Benutzers, den Anwesenheitscode (250) zum Angeben von Anwesenheitsinformationen und die ID (270) zum Identifizieren einer Mitgliedschaft des Benutzers umfasst.

15. Eine Informationsempfangseinheit eines mobilen Handapparats, die Folgendes umfasst:
eine Funkfrequenzeinheit für den Empfang eines eine Nachricht darstellenden Funksignals über einen Kurznachrichtendienst;
**gekennzeichnet durch**
ein Nachrichtenkodierungsmodul (171) zum Bestimmen, ob die Nachricht einen Typ (210) zum Unterscheiden des Typs einer Anwesenheitsinformationsnachricht umfasst, und zum Dekodieren der Nachricht, wenn die Nachricht den Typ (210) zum Unterscheiden des Typs der Anwesenheitsinformationsnachricht umfasst;
ein Nachrichtenanalysemodul (173) zum Extrahieren einer Anwesenheitsinformationsdatei aus der dekodierten Nachricht;
ein Modul für ein aktives Telefonbuch (175) zum Speichern eines aktiven Telefonbuchs, in dem eine Benutzergruppe mit Mitgliedern zum Teilen von Anwesenheitsinformationen verwaltet wird, und zum Aktualisieren des aktiven Telefonbuchs mit der Anwesenheitsinformationsdatei; und
eine Steuereinheit (170) zum Anzeigen der Anwesenheitsinformationen auf einer Anzeigeeinheit (160) des mobilen Handapparats.

16. Die Informationsempfangseinheit nach Anspruch 15, wobei die Anwesenheitsinformationsdatei weiter eine Kennung (270) zum Identifizieren des Benutzers, einen Anwesenheitscode (250) zum Angeben von Anwesenheitsinformationen und eine ID (270) zum Identifizieren der Mitgliedschaft des Benutzers umfasst.

## Revendications

1. Un procédé de transmission d'informations destiné à un combiné mobile, comprenant :
la génération d'un fichier d'informations de présence, et
la génération d'un message d'informations de présence contenant le fichier d'informations de présence,
**caractérisé en ce que** le procédé comprend en outre l'opération de transmission du message d'informations de présence à au moins un membre d'un groupe d'utilisateurs prédéterminé au moyen d'un service de messages courts,
où le fichier d'informations de présence comprend un type (210) destiné à la distinction du type du message d'informations de présence, un identifiant (230) destiné à l'identification d'un utilisateur, un code de présence (250) destiné à l'indication d'informations de présence et un identifiant (270) destiné à l'identification d'une qualité de membre de l'utilisateur.

2. Le procédé de transmission d'informations selon la Revendication 1, où le code de présence (250) est généré conformément à un événement d'entrée d'une touche.

3. Le procédé de transmission d'informations selon la Revendication 1, où le code de présence (250) est généré automatiquement conformément à des événements de mise sous tension et de mise hors tension du combiné mobile.

4. Le procédé de transmission d'informations selon la Revendication 1, où le message d'informations de présence contient un texte d'informations de présence.

5. Un procédé de réception d'informations destiné à un combiné mobile, comprenant l'opération de réception d'un message par l'intermédiaire d'un service de messages courts,
le procédé étant **caractérisé par** les opérations suivantes :
la détermination si le message contient un type (210) destiné à la distinction du type d'un message d'informations de présence,
l'extraction, si le message contient le type (210) destiné à la distinction du type du message d'informations de présence, d'un fichier d'informations de présence à partir du message, et
l'actualisation d'informations de présence d'un membre d'un groupe d'utilisateurs prédéterminé conformément au fichier d'informations de présence.

6. Le procédé de réception d'informations selon la Revendication 5, comprenant en outre :
la réception d'un numéro de téléphone destiné à un appel par l'intermédiaire d'un moyen d'entrée (140) du combiné mobile,
la détermination si le numéro de téléphone est pour le membre du groupe d'utilisateurs, et
l'affichage, si le numéro de téléphone est pour le membre du groupe d'utilisateurs, d'informations de présence du membre.

7. Le procédé de réception d'informations selon la Revendication 6, comprenant en outre la transmission d'une demande d'appel vers le numéro de téléphone conformément à une entrée par une touche.

8. Le procédé de réception d'informations selon la Revendication 6, comprenant en outre la transmission d'un message vers le numéro de téléphone conformément à l'entrée par une touche.

9. Le procédé de réception d'informations selon la Revendication 6, comprenant en outre l'annulation de l'appel conformément à l'entrée par une touche.

10. Le procédé de réception d'informations selon la Revendication 5, où le message d'informations de présence est déterminé en fonction d'un champ type (210) contenu dans le message.

11. Le procédé de réception d'informations selon la Revendication 5, où l'actualisation d'informations de présence comprend :
la récupération d'un membre possédant un identifiant (270) et un identifiant (230) du fichier d'informations de présence à partir d'une base de données du groupe d'utilisateurs, et
l'actualisation des informations de présence avec un code de présence (250) et un texte de présence contenu dans le fichier d'informations de présence.

12. Le procédé de réception d'informations selon la Revendication 5, où le message d'informations de présence contient un texte d'informations de présence.

13. Le procédé de réception d'informations selon la Revendication 5, où le fichier d'informations de présence comprend en outre un identifiant (230) destiné à l'identification de l'utilisateur, le code de présence (250) destiné à l'indication d'informations de présence et l'identifiant (270) destiné à l'identification d'une qualité de membre de l'utilisateur.

14. Un émetteur d'informations d'un combiné mobile, comprenant :
une unité d'espace mémoire (150) destiné à la conservation en mémoire d'un répertoire téléphonique actif gérant des informations de présence relatives à des membres d'au moins un groupe d'utilisateurs,
un module de codage de message (171) destiné à la génération du fichier d'informations de présence (170) au moyen des informations de présence, et
une unité de commande (170) destinée à la génération d'un message d'informations de présence avec le fichier d'informations de présence,
**caractérisé en ce que** l'unité de commande (170) est agencée de façon à transmettre le message d'informations de présence aux membres du groupe d'utilisateurs au moyen d'un service de messages courts,
où le fichier d'informations de présence contient en outre un type (210) destiné à la distinction du type du message d'informations de présence, un identifiant (230) destiné à l'identification de l'utilisateur, le code de présence (250) destiné à l'indication d'informations de présence et l'identifiant (270) destiné à l'identification d'une qualité de membre de l'utilisateur.

15. Un récepteur d'informations d'un combiné mobile, comprenant :
une unité radioélectrique destinée à la réception d'un signal radio représentant un message par l'intermédiaire d'un service de messages courts,
**caractérisé par**
un module de codage de message (171) destiné à la détermination si le message contient un type (210) destiné à la distinction du type d'un message d'informations de présence et au décodage, si le message contient le type (210) destiné à la distinction du type du message d'informations de présence, du message,
un module d'analyse de message (173) destiné à l'extraction d'un fichier d'informations de présence à partir du message décodé,
un module de répertoire téléphonique actif (175) destiné à la conservation en mémoire d'un répertoire téléphonique actif gérant un groupe d'utilisateurs possédant des membres de façon à partager des informations de présence et à actualiser le répertoire téléphonique actif avec le fichier d'informations de présence, et
une unité de commande (170) destinée à l'affichage des informations de présence sur une unité d'affichage (160) du combiné mobile.

16. Le récepteur d'informations selon la Revendication 15, où le fichier d'informations de présence contient en outre un identifiant (270) destiné à l'identification de l'utilisateur, un code de présence (250) destiné à l'indication d'informations de présence et un identifiant (270) destiné à l'identification de la qualité de membre de l'utilisateur.
